# FASCICULE DE BREVET EUROPEEN

(11) **EP 3 898 280 B1**
(45) Date de publication et mention de la délivrance du brevet: **07.02.2024**
(21) Numéro de dépôt: 19839390.2
(22) Date de dépôt: 11.12.2019
(51) Int. Cl.: B60C 11/03, B60C 11/12

(54) **BANDE DE ROULEMENT COMPORTANT DES RAINURES INTERROMPUES**
LAUFFLÄCHE MIT UNTERBROCHENEN RILLEN
TREAD COMPRISING INTERRUPTED GROOVES

(30) Priorité: 19.12.2018 FR 1873352; 30.01.2019 FR 1900868
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: DOMPROBST, Frédéric, 63040 CLERMONT-FERRAND Cedex 9 (FR)
(74) Mandataire: M.F.P. Michelin
(86) Numéro de dépôt international: PCT/FR2019/053024
(87) Numéro de publication internationale: WO 2020/128237

(56) Documents cités:
- EP-A1- 2 011 671
- EP-A1- 2 962 872
- JP-A- 2008 213 596

## Description

L'invention concerne les bandes de roulement pour pneus de véhicules poids lourd et plus particulièrement les arrangements de creux dont sont pourvues ces bandes de roulement grâce auxquels à la fois les performances en drainage de l'eau sur la chaussée par temps de pluie sont rendues plus pérennes, et les performances en roulage sont améliorées.

### DEFINITIONS

Par découpure, on entend toute cavité ou creux réalisé notamment par moulage dans une bande de roulement pour pneu, une découpure s'étendant à la fois dans la profondeur de la bande de roulement et dans une direction principale - qui est la direction d'écoulement de l'eau dans la découpure lors d'un roulage par temps de pluie. Cette direction principale correspond à la plus grande dimension de la découpure sur la surface de roulement.

Par rainure ouverte, on entend une découpure ouverte sur une surface de roulement d'une bande de roulement venant en contact avec la chaussée, cette rainure étant délimitée par des parois en vis-à-vis, la distance moyenne entre ces parois étant appropriée pour que ces parois ne soient pas en contact l'une avec l'autre dans les conditions normales d'utilisation du pneu.

Par incision, on entend une découpure mince ayant une largeur moyenne petite, cette largeur moyenne correspondant à la distance moyenne séparant les parois en vis-à-vis la délimitant, et telle que, sous les conditions normales d'utilisation du pneu, ces parois puissent venir, au moins partiellement, en contact l'une sur l'autre lors du passage dans la région de contact du pneu avec la chaussée.

Par cavité cachée, on entend une cavité formée sous la surface de roulement à neuf de la bande de roulement, cette cavité pouvant être destinée à former une nouvelle rainure ouverte sur la nouvelle surface de roulement générée après une usure partielle prédéterminée. Une cavité cachée est délimité par deux parois principales en vis-à-vis, ces deux parois principales étant reliées entre elles par une partie inférieure formant un fond et par une partie supérieure dans le prolongement de ces parois principales radialement vers l'extérieur. Dans cette partie supérieure, une incision peut s'ouvrir pour relier la cavité cachée à la surface de roulement à neuf. Vue en coupe, une cavité cachée peut prendre toute forme géométrique comme par exemple : circulaire, rectangulaire, triangulaire.

Par épaisseur de matière à user d'une bande de roulement, on entend l'épaisseur de matière de cette bande de roulement pouvant être usée en roulage avant d'atteindre une limite légale d'usage, cette limite pouvant être repérée par des dispositifs indicateurs de l'usure formés notamment dans les rainures. Lorsque cette limite est atteinte, une intervention est nécessaire afin soit de reformer un nouveau dessin de creux sur la bande de roulement du pneu soit de remettre une nouvelle bande de roulement voire de changer de pneu.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande.

Par ailleurs, on utilise le terme circonférentiel pour indiquer une direction qui, correspond à une direction tangente à tout cercle centré sur l'axe de rotation du pneu. Cette direction circonférentielle correspond à la direction longitudinale de la bande de roulement, cette dernière étant réalisée sous la forme d'une bande plane avant son incorporation dans la fabrication d'un nouveau pneu ou le rechapage d'un pneu usé.

Le terme transversal fait référence à une direction qui est parallèle à la direction de l'axe de rotation du pneu. Cette direction est perpendiculaire à la direction radiale et à la direction circonférentielle. Une direction est dite oblique dès lors qu'elle forme un angle plus grand que zéro avec la direction circonférentielle ou longitudinale sur une bande de roulement.

### TECHNIQUE ANTÉRIEURE

De façon connue, des conditions de roulage par temps de pluie requièrent une élimination la plus rapide possible de l'eau entre la bande de roulement de chaque pneu et la chaussée afin de réaliser un contact entre la matière composant la bande de roulement et la chaussée. L'eau qui n'est pas repoussée sur l'avant ou évacuée sur les côtés du pneu rentre et s'écoule en partie dans des découpures formées dans la bande de roulement, ces découpures prenant la forme de cavités s'ouvrant à neuf sur la surface de roulement de la bande de roulement. Ces cavités peuvent être orientées dans la direction circonférentielle ou la direction transversale ou encore dans une direction oblique intermédiaire entre les deux précédentes directions voire dans une combinaison de ces directions. Par orientation d'une cavité, il faut entendre l'angle que fait la direction de sa plus grande dimension sur la surface de roulement avec par exemple la direction circonférentielle sur le pneu.

Quelle que soit la catégorie de pneu, la bande de roulement de ce pneu doit offrir une performance en drainage de l'eau sur la route qui se situe toujours au-dessus d'une performance minimale dite performance de sécurité. En conséquence et compte tenu de l'usure progressive de la bande de roulement qui réduit progressivement les surfaces des sections transversales des rainures et la capacité de ces rainures à drainer une quantité donnée de liquide, il est usuel de réaliser des rainures débouchant sur la surface de roulement à l'état neuf, ces rainures se prolongeant dans l'épaisseur de la bande jusqu'à au moins un niveau qui correspond à une limite légale d'usure nécessitant le retrait de la bande.

La réalisation d'une telle pluralité de rainures ouvertes sur la surface de roulement d'une bande de roulement a toutefois pour inconvénient de réduire la quantité de matière pour une largeur donnée de bande de roulement et par voie de conséquence de diminuer très sensiblement les rigidités de la bande de roulement ce qui a une incidence sur la performance en usure. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le coût de fabrication du pneu luimême. Ces diminutions de rigidité peuvent en outre affecter la vitesse d'usure, la régularité de cette usure et certaines des performances attendues en roulage.

En outre, on constate une augmentation de la résistance au roulement, c'est-à-dire une augmentation de la dissipation d'énergie à chaque tour de roue, cette dissipation étant liée aux plus grandes déformations subies par les matériaux élastomériques formant la bande de roulement, ce qui se traduit par une augmentation sensible de la consommation des véhicules équipés de tels pneus.

Pour résoudre au moins en partie un tel problème, il a été proposé dans le document EP 2323858-B1 de former à la fois des rainures et en totalité sous la surface de roulement de la bande de roulement à neuf des cavités cachées, chaque cavité cachée, formant un canal, étant prolongée vers la surface de roulement de la bande de roulement à neuf par une incision de géométrie appropriée pour favoriser une plus grande rigidité. Avec ce type de pneu, il est possible de renouveler une partie plus ou moins importante du volume de drainage initial des rainures lorsque la bande a atteint un niveau d'usure prédéterminé.

Il est également connu de former ce qui a été décrit comme des rainures ondulant (EP2483087 B1) dans l'épaisseur d'une bande de roulement, ces rainures présentant des parties ouvertes sur la surface de roulement à neuf et des parties cachées dans l'épaisseur de la bande de roulement, ces parties étant reliées entre elles par des parties intermédiaires. Pour faciliter moulage et démoulage il est formé une incision reliant les parties cachées et intermédiaires avec la surface de roulement à neuf. Cette disposition de rainures est bien entendu favorable d'un point de vue limitation de la diminution de la rigidité liée à la présence de creux dans la bande de roulement. Toutefois, après une certaine usure partielle les parties intermédiaires, puis les parties cachées restent seules ouvertes sur la surface de roulement d'une façon discontinue, ce qui peut nécessiter la présence de rainures additionnelles actives à partir d'une usure partielle. Ces rainures additionnelles peuvent résulter de la transformation de canaux entièrement formés à l'intérieur de la bande de roulement.

Il a également été proposé notamment dans le document EP 2379352 B1 de prolonger des cavités cachées par une pluralité de cavités s'ouvrant à la fois dans une cavité cachée et sur la surface de roulement de la bande de roulement à neuf. Les documents JP 2008213596A, EP 2011671A1 et EP 2962872A1 décrivent également rainures présentant des parties ouvertes sur la surface de roulement à neuf et des parties cachées dans l'épaisseur de la bande de roulement.

Bien que ces dispositions soient favorables d'un point de vue de l'équilibre des performances, il a été fait le constat que certaines performances en roulage nécessitaient encore d'être améliorées. C'est le cas en ce qui concerne la résistance mécanique des bords d'une bande de roulement de pneu pour poids lourd. En effet, la présence de rainure ouverte en totalité sur la surface de roulement au voisinage d'un bord de bande, peut, sous certaines conditions d'usage, générer des contraintes mécaniques importantes en fond de rainure.

### RÉSUMÉ DE L'INVENTION

La présente invention est relative à une solution à ce problème de résistance mécanique des découpures près des bords d'une bande de roulement combiné à celui de la réduction de la perte énergétique dans la bande de roulement à chaque tour de roue.

À cet effet, l'invention a pour objet une bande de roulement pour pneu de véhicule poids lourd ayant une épaisseur totale E correspondant à l'épaisseur totale de matière à user en roulage. Cette bande de roulement présente une surface de roulement à neuf destinée à venir en contact avec une chaussée lors du roulage d'un pneu pourvu de cette bande. Cette surface de roulement se renouvelle progressivement avec l'usure générée par le roulage sur la chaussée.

Cette bande de roulement comprend des bords latéraux délimitant axialement une largeur de bande de roulement et deux faces latérales prolongeant latéralement la bande de roulement.

Cette bande de roulement comprend près de chacun de ses bords latéraux :
- une pluralité de puits ouverts sur la surface de roulement à neuf, ces puits ouverts de profondeur Pmax étant disposés circonférentiellement avec une distance moyenne D entre deux puits ouverts consécutifs ; chaque puits étant délimité par deux faces principales, les deux faces principales étant reliées l'une à l'autre par un fond, ce fond définissant la profondeur du puits, chaque puits ayant une longueur maximale d'ouverture Lc mesurée dans la direction circonférentielle et une largeur transversale La mesurant la distance entre les faces principales, cette largeur La étant inférieure à la longueur maximale d'ouverture Lc,
- chaque puits ouvert étant relié à au moins une cavité cachée formée à l'intérieur de la bande de roulement, cette cavité cachée étant ouverte dans une face principale dudit puits,
- cette bande de roulement étant dépourvue de rainure continue circonférentielle entre la pluralité de puits axialement près d'un bord et ledit bord,

Selon l'invention, chaque cavité cachée reliée à un puits ouvert sur la surface de roulement à neuf s'ouvre sur une face latérale de la bande de roulement afin de permettre l'évacuation de liquide drainé à l'intérieur dudit puits ouvert.

Grâce à cette disposition, il est possible de ne pas avoir de rainure continue circonférentielle près des bords et ainsi de maintenir à un niveau relativement élevé la rigidité de la bande de roulement à l'état neuf tout en bénéficiant d'un volume de drainage approprié et pouvant être ajusté par les volumes respectifs des puits ouverts et des cavités cachées. Bien entendu, les cavités cachées peuvent former des rainures additionnelles transverses ou obliques et donc de nouvelles arêtes actives dans le contact avec la chaussée, après une usure prédéterminée faisant apparaitre ces cavités sur la surface de roulement.

Il est intéressant que deux cavités cachées s'ouvrant sur l'extérieur soient formées pour s'ouvrir sur une face latérale d'un même puits, ces cavités cachées étant orientées de façons différentes afin de rendre insensible le fonctionnement de ces cavités cachées au sens de rotation du pneu.

Avantageusement, les puits ouverts ont sur la surface de roulement une ouverture de forme allongée, la longueur maximale d'ouverture Lc étant au moins égale à deux fois la dimension de plus petite largeur La, cette dernière étant mesurée perpendiculairement à la longueur maximale d'ouverture Lc.

Afin de bénéficier au mieux de l'effet de drainage sur les épaules, il est judicieux de prévoir la présence en permanence d'au moins deux puits ouverts sur la surface de roulement à neuf dans l'empreinte de contact sur la chaussée, cette empreinte étant obtenue pour les conditions d'utilisation du pneu pourvu de la bande de roulement selon l'invention.

Pour une pérennité de la performance en roulage sur chaussée revêtue d'eau jusqu'à usure complète de la bande de roulement, la profondeur Pmax des puits est supérieure à l'épaisseur E de matière à user de la bande de roulement

Dans un mode de réalisation simplifiant la fabrication de la bande de roulement, une incision ouverte sur la surface de roulement à neuf s'étend jusqu'à la cavité cachée d'un puits ouvert et s'ouvre également sur ledit puits.

Dans un mode de réalisation de l'invention, au moins certaines cavités cachées ne sont pas ouvertes sur l'extérieur de la bande de roulement et dans ce cas le volume de chacune desdites cavités est ajusté pour être suffisant pour réaliser un drainage de l'eau présente sur la chaussée dans la région des bords du pneu lors de roulage sur chaussée revêtue d'eau par temps de pluie. Le volume de l'ensemble des cavités connectées aux puits moulés près d'un bord est choisi comme étant un pourcentage de la différence entre le volume d'une rainure continue circonférentielle et la somme des volumes de ces puits. Ce pourcentage est au moins égal à 0.25 et au plus égal à 0.50.

Dans un mode de réalisation, il est possible de prévoir plus d'une cavité cachée s'ouvrant sur un même puits afin d'avoir une bonne capacité de drainage. Afin d'obtenir une rigidité optimale du bord d'une bande de roulement selon l'invention, chaque cavité cachée est formée au plus près du fond du puits dans lequel elle s'ouvre.

Avantageusement, chaque cavité cachée a, à partir d'un puits ouvert, une forme allongée et est orientée pour faire un angle au moins égal à 30 degrés avec la direction circonférentielle correspondant à la disposition de la pluralité de puits ouverts sur un bord de la bande de roulement.

Dans une variante préférentielle, toutes les cavités cachées sont formées d'un même côté par rapport à la pluralité de puits formés axialement près d'un même bord latéral de la bande de roulement.

Dans un mode de réalisation, la bande de roulement est appropriée pour conférer une direction de rotation préférentielle au pneu pourvu de cette bande. Cette direction préférentielle est en général matérialisée sur la bande de roulement ou sur le pneu par un élément visuel ou marquage comme par exemple une flèche. Dans ce mode de réalisation spécifique, la ou les cavités cachées reliées à un puits sont orientées pour favoriser l'écoulement de l'eau présente sur une chaussée vers l'extérieur de la bande de roulement. Précisément, ces cavités cachées sont orientées afin que, vue en projection sur la surface de roulement, la partie de chaque cavité cachée s'ouvrant dans le puits entre la première en contact avec la chaussée. Ainsi un écoulement dans le puits sera dévié dans la cavité selon un angle faible et inférieur à 45 degrés avec la direction circonférentielle.

En combinaison avec l'une quelconque des dispositions décrites de l'invention, il est possible de prévoir la présence d'une incision entre les puits ouverts axialement près d'un même bord latéral de la bande de roulement, ces incisions s'étendant sur une partie de la profondeur de la bande ou bien jusqu'à la profondeur Pmax desdits puits.

L'invention concerne également un pneu pourvu d'une bande de roulement comportant sur chacun de ses bords latéraux une pluralité de puits ouverts dans lesquels s'ouvrent des cavités cachées formées à l'intérieur de la bande de roulement, ces cavités cachées s'ouvrant ou non vers l'extérieur comme cela vient d'être décrit. La bande de roulement de ce pneu peut en combinaison comporter des rainures traditionnelles et/ou des canaux cachés destinées à former des rainures additionnelles après une usure partielle prédéterminée. Dans pareil cas, il peut être envisagé de faire s'ouvrir les cavités cachées reliées aux puits ouverts dans ces rainures ou ces canaux cachés.

D'autres caractéristiques et avantages de l'invention ressortent de la description faite ci-après en référence aux dessins annexés qui montrent, à titre d'exemple non limitatif, des formes de réalisation de l'objet de l'invention

### BRÈVE DESCRIPTION DES DESSINS

[Fig 1] La figure 1 montre une première variante, non conforme à l'invention, de disposition des puits ouverts sur une surface de roulement, ces puits ouverts étant formés près d'un bord latéral d'une bande de roulement ;
[Fig 2] La figure 2 montre en coupe transversale (selon II-II) la variante, non conforme à l'invention, montrée avec la figure 1 à l'état neuf ;
[Fig 3] La figure 3 montre une deuxième variante, conforme à l'invention, de disposition des puits ouverts formés près d'un bord latéral d'une bande de roulement ayant des caractéristiques impliquant une direction d'utilisation préférentielle lorsqu'elle équipe un pneu.

### DESCRIPTION DÉTAILLÉE

Pour faciliter la lecture des figures, des mêmes signes de référence sont employés pour la description de variantes de l'invention dès lors que ces signes font référence à des éléments de même nature que cette nature soit structurelle ou bien fonctionnelle.

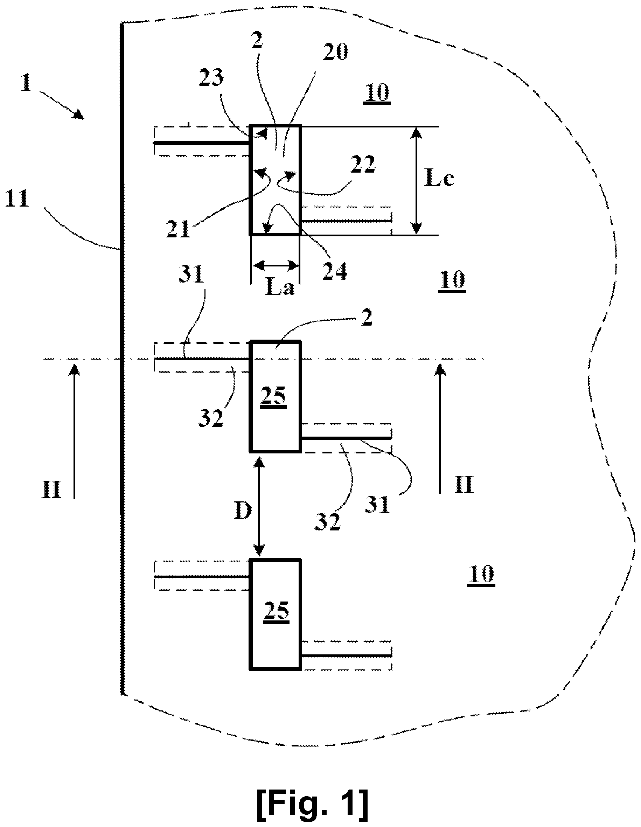

La figure 1 montre une première variante de disposition des puits ouverts sur une surface de roulement, ces puits étant formés près d'un bord latéral d'une bande de roulement.

Sur cette figure 1 est montrée une vue partielle d'une bande de roulement 1 de pneu pour poids lourd ayant une surface de roulement 10 à neuf destinée à venir en contact avec une chaussée lors du roulage. La vue partielle de la figure 1 montre un bord latéral 11 de cette bande de roulement.

Près de ce bord latéral 11, il est formé une pluralité de puits ouverts 2 sur la surface de roulement 10 à neuf. Ces puits ouverts 2 sont disposés selon une direction circonférentielle avec une distance D entre deux puits. Chacun de ces puits ouverts 2 présente une ouverture 20 sur la surface de roulement, cette ouverture 20 ayant, dans l'exemple décrit, une forme rectangulaire de longueur maximale d'ouverture Lc et de largeur La. Pour le pneu de l'exemple de dimension 315/70R22.5 la longueur Lc vaut 25 mm et la largeur La vaut 10 mm, la distance D vaut 30 mm. Les dimensions : longueur maximale d'ouverture Lc et distance D entre deux puits, sont déterminées afin qu'il y ait en permanence au moins deux puits ouverts 2 présents dans le contact avec la chaussée dans les conditions d'utilisation.

Chaque puits ouvert 2 est délimité dans l'épaisseur de la bande de roulement 1 par des faces principales 21, 22, ces faces principales comprenant des faces d'extrémité 23, 24. Les faces principales étant réunies entre elles par un fond 25. Ce fond 25 est à une distance Pmax de la surface de roulement 10 à neuf et dans le cas présent cette distance Pmax est supérieure à l'épaisseur E de matière à user en roulage afin de maintenir la présence d'un creux jusqu'à usure complète de la bande de roulement.

De plus, il est formé, à l'intérieur de la bande de roulement et près de chaque face d'extrémité 23, 24 de chaque puits ouvert 2, une cavité cachée 32 s'ouvrant dans une des faces principales 21, 22 délimitant ce puits 2. Surmontant chacune de ces cavités cachées 32, il est formé une incision 31 s'ouvrant à la fois sur la surface de roulement 10 et dans l'une des faces principales 21, 22 délimitant le puits ouvert 2.

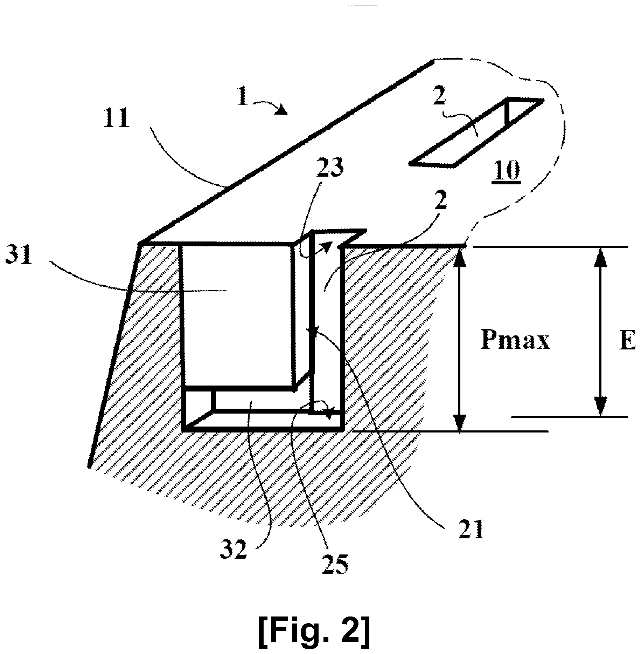

Ces cavités cachées 32 ne s'ouvrent pas vers l'extérieur de la bande de roulement notamment sur les parties latérales de la bande de roulement comme cela est mieux visible sur la figure 2 montrant en coupe transversale la variante montrée avec la figure 1 à l'état neuf.

Sur cette figure 2 on voit qu'une cavité cachée 32 s'ouvre dans le puits 2 au plus près du fond 25 dudit puits afin de générer un supplément de volume de drainage s'ajoutant à celui du puits ouvert compensant ainsi le fait que la bande de roulement ne comprend pas de rainure ouverte circonférentielle et continue près de ses bords latéraux.

Ce volume additionnel est inférieur au volume manquant de rainure à l'état initial : en effet, la personne du métier sait qu'avec une rainure il faut prévoir un volume plus grand que nécessaire à neuf puisqu'il faut tenir compte de l'usure de la bande et de la réduction progressive du volume disponible dans la rainure. Avec la présente invention, il est possible d'ajuster au mieux le volume total de creux (incluant le volume des puits ouverts et celui des cavités cachées reliées aux puits).

En outre, chaque cavité cachée 32 génère une nouvelle rainure transversale après usure partielle de la bande de roulement, cette rainure transversale étant utile dans la dernière phase d'usage de la bande de roulement.

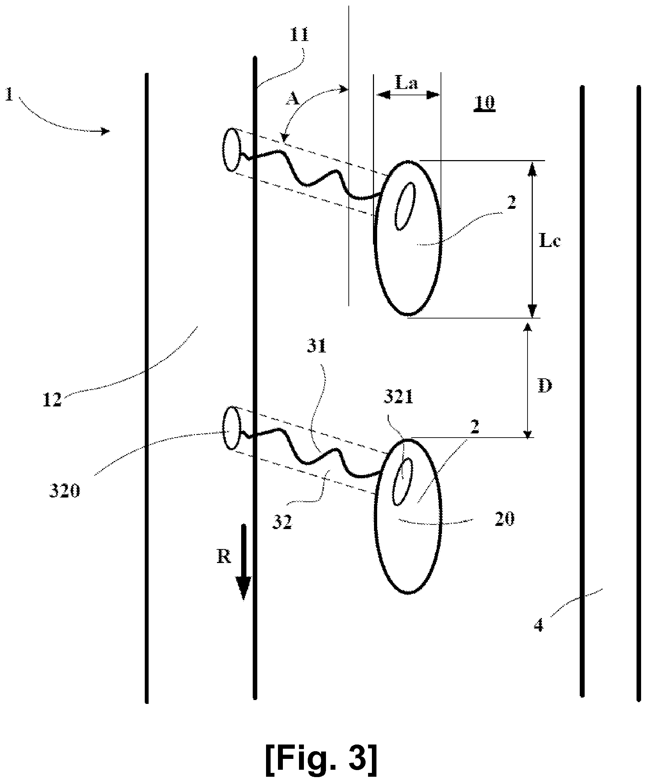

La figure 3 montre une deuxième variante de forme et de disposition des puits ouverts 2 formés près d'un bord latéral d'une bande de roulement ayant des caractéristiques propres impliquant une direction d'utilisation préférentielle lorsqu'elle équipe un pneu (cette direction est repérée sur la figure par une flèche R). Cette direction préférentielle est en règle générale repérée sur le pneu par un signe spécifique visible de l'usager.

Dans pareil cas, il est avantageux d'orienter les cavités cachées 32 de manière à utiliser au mieux ce sens de rotation préférentiel. Le cas décrit montre des puits ouverts 2 ayant sur la surface de roulement 10 à neuf une ouverture 20 de forme oblongue dont la plus grande des dimensions notée Lc est mesurée dans la direction circonférentielle. Près du fond 25 de chacun des puits ouverts 2, une cavité cachée 32 s'ouvre à une de ses extrémité par une ouverture 321 dans le puits 2, cette cavité cachée 32 s'ouvrant à son autre extrémité sur l'une des faces latérales 12 de la bande de roulement par une ouverture 320 (chaque face latérale 12 coupant la surface de roulement 10 pour former un bord 11 de la bande). La présence de cette ouverture 320 permet de réduire encore le volume de chaque cavité cachée au juste nécessaire pour réaliser le drainage et l'évacuation de l'eau présente sur le bord de la bande de roulement lors du contact avec une chaussée revêtue d'eau.

Chacune des cavités cachées 32 fait un angle moyen A avec la direction circonférentielle égal ici à 30 degrés avec la direction circonférentielle. Les incisions 31 formées entre la surface de roulement et les cavités cachées sont globalement orientées avec le même angle A. Ces incisions sont, dans le cas présenté, de géométrie ondulée à la fois en surface et dans la profondeur de la bande.

L'angle A de chaque cavité cachée est approprié pour favoriser l'écoulement de l'eau présente sur une chaussée vers l'extérieur de la bande de roulement. Précisément, les cavités cachées 32 sont orientées afin que, vue en projection sur la surface de roulement, la partie projetée de l'ouverture 321 de chaque cavité cachée dans le puits entre la première dans le contact avec la chaussée. Cette disposition est favorable dès que l'usure de la bande est telle que la cavité cachée génère une nouvelle rainure.

La direction principale de la cavité cachée correspond à la direction de la longueur de la cavité cachée selon laquelle se produit un écoulement d'eau lors d'un roulage sur chaussée revêtue d'eau.

Une rainure circonférentielle 4 est représentée sur la droite de la figure 3, elle borde ici le côté intérieur de la nervure d'épaule dans laquelle les puits ouverts et les cavités cachées sont situés. Dans cette variante comme dans la précédente, on constate l'absence de rainure continue circonférentielle axialement entre les bords de la bande de roulement et lesdits puits.

## Revendications

1. Bande de roulement (1) pour pneu de véhicule poids lourd ayant une surface de roulement (10) à neuf destinée à venir en contact avec une chaussée lors du roulage d'un pneu pourvu de cette bande, cette bande de roulement (1) comprenant des bords (11) délimitant axialement une largeur de bande et deux faces latérales (12) prolongeant latéralement la bande de roulement (1), cette bande de roulement (1) comprenant près de chacun de ses bords (11) une pluralité de puits ouverts (2) sur la surface de roulement à neuf, ces puits ouverts (2) de profondeur Pmax étant disposés circonférentiellement ; chaque puits ouvert (2) étant délimité par deux faces principales (21, 22) reliées par un fond (25) de puits, ce fond (25) définissant la profondeur Pmax du puits, chaque puits ouvert (2) ayant une longueur maximale d'ouverture Lc mesurée dans la direction circonférentielle sur la surface de roulement et une largeur transversale La mesurant la distance entre les faces principales (21, 22), cette largeur La étant inférieure à la longueur d'ouverture maximale circonférentielle Lc, chaque puits ouvert (2) étant relié à au moins une cavité cachée (32) formée à l'intérieur de la bande de roulement, cette cavité cachée (32) s'ouvrant dans une face principale (21, 22) dudit puits, cette bande de roulement (1) étant dépourvue de rainure continue circonférentielle entre la pluralité de puits (2) axialement près d'un bord (11) et ledit bord, **caractérisée en ce que** chaque cavité cachée (32) reliée à un puits ouvert (2) sur la surface de roulement à neuf s'ouvre sur une face latérale (12) de la bande de roulement afin de permettre l'évacuation de liquide drainé à l'intérieur dudit puits ouvert (2).

2. Bande de roulement (1) selon la revendication 1 **dans laquelle** les puits ouverts (2) ont, sur la surface de roulement (10), une ouverture (20) de forme allongée, la longueur d'ouverture maximale circonférentielle Lc étant au moins égale à deux fois la largeur transversale La.

3. Bande de roulement (1) selon la revendication 1 ou la revendication 2 **dans laquelle** il y a en permanence au moins deux puits ouverts (2) sur la surface de roulement (10) à neuf dans l'empreinte de contact sur la chaussée, cette empreinte étant obtenue pour les conditions d'utilisation du pneu pourvu de cette bande de roulement.

4. Bande de roulement (1) selon l'une quelconque des revendications 1 à 3 **dans laquelle** une incision (31) ouverte sur la surface de roulement (10) à neuf s'étend jusqu'à la cavité cachée (32) d'un puits ouvert (2) et s'ouvre également sur ledit puits.

5. Bande de roulement (1) selon l'une quelconque des revendications 1 à 4 **dans laquelle** chaque cavité cachée (32) est formée au plus près du fond (25) du puits dans lequel elle s'ouvre.

6. Bande de roulement (1) selon l'une quelconque des revendications 1 à 5 **dans laquelle** chaque cavité cachée (32) a, à partir d'un puits ouvert (2), une forme allongée et est orientée pour faire un angle moyen A au moins égal à 30 degrés avec la direction circonférentielle.

7. Bande de roulement (1) selon l'une quelconque des revendications 1 à 6 **dans laquelle** toutes les cavités cachées (32) sont formées d'un même côté par rapport à la pluralité de puits (2) formés axialement près d'un même bord (11) latéral de la bande de roulement.

8. Bande de roulement (1) selon l'une quelconque des revendications 1 à 7 **dans laquelle** la bande de roulement est appropriée pour conférer une direction de rotation préférentielle au pneu pourvu de cette bande, et **dans laquelle** la ou les cavités cachées (32) reliées à un puits ouvert (2) sont orientées de telle manière que, vue en projection sur la surface de roulement, la partie de chaque cavité cachée s'ouvrant dans le puits entre la première en contact avec la chaussée.

9. Pneu pour véhicule poids lourd pourvu d'une bande de roulement (1) selon l'une quelconque des revendications 1 à 8. 1

## Patentansprüche

1. Laufstreifen (1) für einen Lkw-Reifen, der eine Lauffläche (10) im Neuzustand aufweist, die dazu bestimmt ist, beim Rollen eines mit diesem Laufstreifen versehenen Reifens mit einer Fahrbahn in Kontakt zu kommen, wobei dieser Laufstreifen (1) Ränder (11), die eine Laufstreifenbreite axial begrenzen, und zwei Seitenflächen (12), die den Laufstreifen (1) seitlich verlängern, umfasst, wobei dieser Laufstreifen (1) in der Nähe jedes seiner Ränder (11) mehrere auf der Lauffläche im Neuzustand offene Schächte (2) umfasst, wobei diese offenen Schächte (2) mit einer Tiefe Pmax in Umfangsrichtung angeordnet sind; wobei jeder offene Schacht (2) von zwei Hauptseiten (21, 22) begrenzt wird, die durch einen Schachtboden (25) verbunden sind, wobei dieser Boden (25) die Tiefe Pmax des Schachtes definiert, wobei jeder offene Schacht (2) eine in der Umfangsrichtung auf der Lauffläche gemessene maximale Öffnungslänge Lc und eine den Abstand zwischen den Hauptseiten (21, 22) angebende Breite in Querrichtung La aufweist, wobei diese Breite La kleiner als die maximale Öffnungslänge in Umfangsrichtung Lc ist, wobei jeder offene Schacht (2) mit mindestens einem verdeckten Hohlraum (32) verbunden ist, der im Inneren des Laufstreifens ausgebildet ist, wobei sich dieser verdeckte Hohlraum (32) in einer Hauptseite (21, 22) des Schachtes öffnet, wobei dieser Laufstreifen (1) zwischen den axial in der Nähe eines Randes (11) befindlichen mehreren Schächten (2) und dem Rand nicht mit einer durchgehenden Umfangsrille versehen ist,
**dadurch gekennzeichnet, dass** jeder verdeckte Hohlraum (32), der mit einem auf der Lauffläche im Neuzustand offenen Schacht (2) verbunden ist, sich auf einer Seitenfläche (12) des Laufstreifens öffnet, um das Abfließen von ins Innere des offenen Schachtes (2) aufgenommener Flüssigkeit zu ermöglichen.

2. Laufstreifen (1) nach Anspruch 1, wobei die offenen Schächte (2) auf der Lauffläche (10) eine Öffnung (20) von länglicher Form aufweisen, wobei die maximale Öffnungslänge in Umfangsrichtung Lc mindestens doppelt so groß wie die Breite in Querrichtung La ist.

3. Laufstreifen (1) nach Anspruch 1 oder Anspruch 2, wobei ständig mindestens zwei auf der Lauffläche (10) im Neuzustand offene Schächte (2) in dem Kontaktabdruck auf der Fahrbahn vorhanden sind, wobei dieser Abdruck für die Verwendungsbedingungen des Reifens erhalten wird, der mit diesem Laufstreifen versehen ist.

4. Laufstreifen (1) nach einem der Ansprüche 1 bis 3, wobei ein auf der Lauffläche (10) im Neuzustand offener Einschnitt (31) sich bis zu dem verdeckten Hohlraum (32) eines offenen Schachtes (2) erstreckt und sich auch auf dem Schacht öffnet.

5. Laufstreifen (1) nach einem der Ansprüche 1 bis 4, wobei jeder verdeckte Hohlraum (32) in unmittelbarer Nähe des Bodens (25) des Schachtes ausgebildet ist, in den er sich öffnet.

6. Laufstreifen (1) nach einem der Ansprüche 1 bis 5, wobei jeder verdeckte Hohlraum (32) von einem offenen Schacht (2) aus eine längliche Form aufweist und so ausgerichtet ist, dass er mit der Umfangsrichtung einen mittleren Winkel A von mindestens 30 Grad bildet.

7. Laufstreifen (1) nach einem der Ansprüche 1 bis 6, wobei alle verdeckten Hohlräume (32) auf derselben Seite bezüglich der mehreren Schächte (2) ausgebildet sind, die axial in der Nähe ein und desselben seitlichen Randes (11) des Laufstreifens ausgebildet sind.

8. Laufstreifen (1) nach einem der Ansprüche 1 bis 7, wobei der Laufstreifen geeignet ist, dem mit diesem Laufstreifen versehenen Reifen eine bevorzugte Drehrichtung zu verleihen, und wobei der oder die verdeckten Hohlräume (32), die mit einem offenen Schacht (2) verbunden sind, so ausgerichtet sind, dass, in einer Projektion auf die Lauffläche gesehen, der Teil jedes verdeckten Hohlraums, der sich in den Schacht öffnet, zuerst mit der Fahrbahn in Kontakt kommt.

9. Reifen für einen Lastkraftwagen, der mit einem Laufstreifen (1) nach einem der Ansprüche 1 bis 8 versehen ist.

## Claims

1. Tread (1) for a tyre of a heavy-duty vehicle, having a tread surface (10) when new that is intended to come into contact with a road surface when the tyre provided with this tread is being driven on, this tread (1) comprising edges (11) axially delimiting a tread width, and two lateral faces (12) extending laterally the tread (12), this tread (1) comprising, near to each of its edges (11), a plurality of open wells (2) on the tread surface when new, these open wells (2) of depth Pmax being arranged circumferentially; each open well (2) being delimited by two main faces (21, 22) connected by a well bottom (25), this bottom (25) defining the depth Pmax of the well, each open well (2) having a maximum length of opening Lc measured in the circumferential direction on the tread surface and a transverse width La measuring the distance between the main faces (21, 22), this width La being less than the circumferential maximum length of opening Lc, each open well (2) being connected to at least one hidden cavity (32) formed within the tread, this hidden cavity (32) opening into a main face (21, 22) of said well, this tread having no continuous circumferential groove between the plurality of wells (2) axially close to an edge (11) and said edge, **characterized in that** each hidden cavity (32) connected to an open well (2) opening on the tread surface when new opens onto a lateral face (12) of the tread so as to allow the removal of liquid collected inside said open well (2).

2. Tread (1) according to Claim 1, **wherein** the open wells (2) have, on the tread surface (10), an opening (20) of elongate shape, the circumferential maximum length of opening Lc being at least equal to twice the transverse width La.

3. Tread (1) according to Claim 1 or Claim 2, **wherein** there are permanently at least two open wells (2) on the tread surface (10) when new in the contact patch in contact with the road surface, this contact patch being obtained for the conditions of use of the tyre provided with this tread.

4. Tread (1) according to any one of Claims 1 to 3, **wherein** a sipe (31) open onto the tread surface (10) when new extends as far as the hidden cavity (32) of an open well (2) and also opens onto said well.

5. Tread (1) according to any one of Claims 1 to 4, **wherein** each hidden cavity (32) is formed as close as possible to the bottom (25) of the well into which it opens.

6. Tread (1) according to any one of Claims 1 to 5, **wherein** each hidden cavity (32) has, starting from an open well (2), an elongate shape and is oriented in such a way as to make a mean angle A at least equal to 30 degrees with the longitudinal direction.

7. Tread (1) according to any one of Claims 1 to 6, **wherein** all the hidden cavities (32) are formed on the one same side with respect to the plurality of wells (2) formed axially close to the one same lateral edge (11) of the tread.

8. Tread (1) according to any one of Claims 1 to 7, **wherein** the tread is suitable for conferring a preferred direction of rotation to the tyre provided with this tread, and **wherein** the hidden cavity or cavities (32) connected to an open well (2) are oriented in such a way that, when viewed in projection onto the tread surface, that part of each hidden cavity that opens into the well is the first to come into contact with the road surface.

9. Tyre for a heavy-duty vehicle provided with a tread (1) according to any one of Claims 1 to 8.
